# EUROPÄISCHE PATENTSCHRIFT

(11) **EP 2 072 315 B1**
(45) Veröffentlichungstag und Bekanntmachung des Hinweises auf die Patenterteilung: **16.01.2013**
(21) Anmeldenummer: 08171834.8
(22) Anmeldetag: 16.12.2008
(51) Int. Cl.: B60K 17/28

(54) **Getriebeanordnung eines landwirtschaftlichen oder industriellen Nutzfahrzeugs**
Gear assembly of an agricultural or industrial truck
Agencement d'engrenage d'un véhicule utilitaire agricole ou industriel

(30) Priorität: 22.12.2007 DE 102007062457
(43) Veröffentlichungstag der Anmeldung: 24.06.2009
(73) Patentinhaber: Deere & Company, Moline, IL 61265-8098 (US)
(72) Erfinder: Buhrke, Frank, 69488, Birkenau (DE); Wikner, Aaron D., Cedar Falls, IA 50613 (US)
(74) Vertreter: Dehnhardt, Florian Christopher

(56) Entgegenhaltungen:
- DE-A1- 3 912 855
- DE-A1-102005 025 567
- GB-A- 1 600 526
- US-A- 4 208 923

## Beschreibung

Die vorliegende Erfindung betrifft eine Getriebeanordnung eines landwirtschaftlichen oder industriellen Nutzfahrzeugs, insbesondere eines Traktors. Die Getriebeanordnung umfasst ein von einem Motor des Nutzfahrzeugs antreibbares Fahrgetriebe und ein Zapfwellengetriebe. Bei dem Fahrgetriebe kann es sich um ein Getriebe mit mindestens zwei Schaltstufen, insbesondere ein Lastschaltgetriebe, oder ein stufenloses Getriebe handeln. Das Fahrgetriebe weist einen Hinterachs-Getriebeabgang zum Antreiben einer Hinterachse und einen Vorderachs-Getriebeabgang zum Antreiben einer Vorderachse des Nutzfahrzeugs auf. Mittels des Zapfwellengetriebes ist ein an das Nutzfahrzeug anbringbares Arbeitsgerät antreibbar. Das Zapfwellengetriebe ist über einen Zapfwellen-Getriebeabgang des Fahrgetriebes oder über eine vom Motor des Nutzfahrzeugs angetriebene Welle unabhängig vom Fahrgetriebe antreibbar.

Aus dem Stand der Technik sind landwirtschaftliche Traktoren bekannt, welche mit einem Verbrennungsmotor ausgestattet sind, der die Räder des Traktors sowie eine im Heckbereich angeordnete Zapfwelle antreibt. Die Zapfwelle dient zum Betreiben von an den Traktor anbringbaren Arbeitsgeräten. Zwischen dem Verbrennungsmotor und der Zapfwelle ist ein Zapfwellengetriebe vorgesehen. Derartige Zapfwellengetriebe weisen in der Regel mehrere manuell umschaltbare Übersetzungsstufen auf, sodass sich je nach Motordrehzahl eine gewünschte Zapfwellendrehzahl ergibt. Übliche Zapfwellendrehzahlen betragen 540 oder 1000 Umdrehungen pro Minute.

Die US 4 208 923 zeigt eine Getriebeanordnung nach dem Oberbegriff des Anspruchs 1.

Im Falle der bekannten Getriebeanordnungen ist grundsätzlich vorgesehen, dass das Zapfwellengetriebe unmittelbar von einer Welle angetrieben wird, welche sich entsprechend der Drehzahl des Verbrennungsmotors dreht und welche unabhängig vom Fahrgetriebe ausgebildet ist. Mit anderen Worten wird die Drehzahl bzw. die Drehzahlübersetzung dieser Welle für das Zapfwellengetriebe nicht von dem Fahrgetriebe beeinflusst. Insbesondere kann vorgesehen sein, dass die vom Verbrennungsmotor des Traktors angetriebene Welle durch das Gehäuse des Fahrgetriebes zum Zapfwellengetriebe geführt wird, ohne jedoch vom Fahrgetriebe beeinflusst zu werden. Dementsprechend wird das Zapfwellengetriebe und damit die Zapfwelle mit einer Drehzahl betrieben, die unmittelbar von der Drehzahl des Verbrennungsmotors abhängt.

Die vom Verbrennungsmotor des Traktors angetriebene Welle, mittels welcher das Zapfwellengetriebe angetrieben wird, kann ferner mit einer Getriebeeingangswelle des Fahrgetriebes in Drehverbindung stehen. Die Eingangswelle des Fahrgetriebes ist mittels einer Kupplung vom Verbrennungsmotor trennbar, wobei zugleich die vom Verbrennungsmotor angetriebene Welle von einer Ausgangswelle des Verbrennungsmotors getrennt wird. Im Falle einer derartigen Anordnung kann die Zapfwelle ausschließlich dann betrieben werden, wenn zugleich das Fahrgetriebe angetrieben wird.

Eine andere Getriebeanordnung sieht eine zusätzliche Kupplung vor, mittels welcher die vom Verbrennungsmotor angetriebene Welle mit dem Zapfwellengetriebe in Drehverbindung gebracht werden kann. Insoweit ist ein gleichzeitiger Antrieb des Fahrgetriebes sowie des Zapfwellengetriebes möglich. Es ist allerdings auch denkbar, das Fahrgetriebe oder das Zapfwellengetriebe jeweils einzeln anzutreiben.

Falls das Zapfwellengetriebe bzw. die Zapfwelle mit einer Drehzahl betrieben werden soll, welche von der Fahrtgeschwindigkeit des Nutzfahrzeugs abhängt (sogenannte Wegzapfwelle), besteht die Möglichkeit, das Zapfwellengetriebe mit einer Welle zu koppeln, mittels welcher die Hinterachse des Nutzfahrzeugs angetrieben wird.

Insbesondere für den Fall, dass das Fahrgetriebe und das Zapfwellengetriebe durch Verwendung separater Kupplungen einzeln antreibbar sind, kann eine Hydraulik- bzw. Getriebeölpumpe nicht mit einer Eingangswelle des Fahrgetriebes gekoppelt werden, sofern diese motorabtriebsseitig jenseits der Kupplung für das Fahrgetriebe angeordnet ist, da bei geöffneter Kupplung das Fahrgetriebe und damit auch die Hydraulik- bzw. Getriebeölpumpe außer Betrieb gesetzt wird. Dementsprechend werden derartige Hydraulik- bzw. Getriebeölpumpen im Allgemeinen unmittelbar am Verbrennungsmotor angeordnet.

Es ist jedoch auch bekannt, die vom Verbrennungsmotor angetriebene Welle, mittels welcher das Zapfwellengetriebe angetrieben werden kann, durch das Fahrgetriebe hindurchzuführen und mittels einer Getriebeschaltstelle eine Drehverbindung zwischen dem Zapfwellengetriebe und mit der vom Verbrennungsmotor angetriebenen Welle oder aber mit dem Hinterachs-Getriebeabgang des Fahrgetriebes herzustellen. In diesem Fall kann die vom Verbrennungsmotor angetriebene Welle kontinuierlich in Drehverbindung mit der Ausgangswelle des Verbrennungsmotors stehen. Zwischen dem Fahrgetriebe und dem Zapfwellengetriebe kann dann an der vom Verbrennungsmotor angetriebenen Welle die erforderliche Drehzahl für den kontinuierlichen Betrieb der Hydraulik- bzw. Getriebeölpumpe abgegriffen werden. Um das Zapfwellengetriebe abschalten zu können, ist an einem Zapfwellengetriebeeingang eine Kupplung vorgesehen, mittels welcher eine Drehverbindung mit der vom Verbrennungsmotor angetriebenen Welle trennbar ist. Bei einer derartigen Getriebeanordnung ist es nicht ohne weiteres möglich, eine Wegzapfwelle zu realisieren, also die Ausgangsdrehzahl des Zapfwellengetriebes mit der Fahrtgeschwindigkeit des Traktors zu koppeln, da in diesem Fall die Hydraulik- bzw. Getriebeölpumpe mit einer geschwindigkeitsabhängigen Drehzahl betrieben würde.

Der vorliegenden Erfindung liegt daher die Aufgabe zugrunde, eine Getriebeanordnung der eingangs genannten Art anzugeben, durch welche die vorgenannten Probleme überwunden werden.

Diese Aufgabe wird erfindungsgemäß durch die Lehre des unabhängigen Patentanspruchs 1 gelöst.

Die Kupplung, mittels welcher üblicherweise das Fahrgetriebe vom Motor des Nutzfahrzeugs trennbar ist, Kann zwischen dem Motor und dem Fahrgetriebe angeordnet oder unmittelbar in das Fahrgetriebe integriert sein. Weiterhin kann eine hiervon unabhängige Kupplung zwischen dem Zapfwellengetriebe und dem Vorderachs-Getriebeabgang des Fahrgetriebes vorgesehen sein, so dass zum Aktivieren der Wegzapfwelle das Zapfwellengetriebe über diese Kupplung betrieben wird. Insoweit kann die vom Motor des Nutzfahrzeugs angetriebene Welle unabhängig vom Fahrgetriebe kontinuierlich in Drehverbindung mit der Ausgangswelle des Motors stehen, um eine Hydraulik- bzw. Getriebeölpumpe anzutreiben.

Weitere vorteilhafte Ausgestaltungen und Weiterbildungen der Erfindung gehen aus den Unteransprüchen hervor.

Gemäß der Erfindung ist das Zapfwellengetriebe entweder über den Vorderachs-Getriebeabgang des Fahrgetriebes oder über eine vom Motor des Nutzfahrzeugs angetriebene Welle unabhängig vom Fahrgetriebe antreibbar. Es ist möglich, dass in einem ersten Betriebszustand das Zapfwellengetriebe über den Vorderachs-Getriebeabgang des Fahrgetriebes und in einem zweiten Betriebszustand das Zapfwellengetriebe über eine vom Motor des Nutzfahrzeugs angetriebene Welle unabhängig vom Fahrgetriebe angetrieben wird. Hierzu können entsprechende Kupplungen bzw. Getriebeschaltstellen vorgesehen sein, mittels welchen sich die beiden Betriebszustände einstellen lassen. Ein mit einer derartigen Getriebeanordnung ausgestattetes Nutzfahrzeug stellt daher eine Wegzapfwelle einerseits und eine Zapfwelle mit einer üblichen Zapfwellendrehzahl andererseits bereit.

Insbesondere kann das Zapfwellengetriebe entweder über den Vorderachs-Getriebeabgang oder über den Zapfwellen-Getriebeabgang des Fahrgetriebes antreibbar sein. Demgemäß ist das Zapfwellengetriebe über den Zapfwellen-Getriebeabgang des Fahrzeuggetriebes antreibbar, wenn beispielsweise eine Zapfwellendrehzahl von 540 bzw. 1000 Umdrehungen pro Minute gewünscht ist. Der Zapfwellen-Getriebeabgang des Fahrgetriebes ist zu diesem Zweck derart konfiguriert, dass an diesem eine Drehzahl anliegt, die unabhängig von der momentanen Fahrtgeschwindigkeit des Nutzfahrzeugs ist.

Falls der Zapfwellengetriebeeingang mit der vom Motor des Nutzfahrzeugs angetriebenen Welle koppelbar ist, kann eine Kupplung vorgesehen sein, mittels welcher eine zwischen dem Zapfwellengetriebeeingang und der vom Motor des Nutzfahrzeugs angetriebenen Welle bestehende Verbindung trennbar ist. Eine solche Kupplung ist vorzugsweise in Form einer reibschlüssigen Kupplung ausgebildet. Diese ermöglicht ein Hinzuschalten des Zapfwellengetriebes im laufenden Betrieb, wobei zwischen der vom Motor des Nutzfahrzeugs angetriebenen Welle und der Welle des Zapfwellengetriebeeingangs keine Drehzahlsynchronisation erforderlich ist.

Falls der Zapfwellen-Getriebeabgang des Fahrgetriebes mit dem Zapfwellengetriebeeingang koppelbar ist, kann auch diese Kopplung mittels einer Kupplung trennbar sein. Bei dieser Kupplung kann es sich ebenfalls um eine reibschlüssige Kupplung handeln.

In einer bevorzugten Ausführungsform der Getriebeanordnung ist mittels einer Kupplung der Vorderachs-Getriebeabgang des Fahrgetriebes mit dem weiteren Zapfwellengetriebeeingang koppelbar. Mittels dieser Kupplung ist dementsprechend ein Betrieb des Zapfwellengetriebes möglich, bei welchem die Ausgangsdrehzahl des Zapfwellengetriebes abhängig von der Fahrtgeschwindigkeit des Nutzfahrzeugs ist (sogenannte Wegzapfwelle).

Die vorstehend erwähnten Kupplungen können dem Zapfwellengetriebe, insbesondere dem Zapfwellengetriebeeingang bzw. dem weiteren Zapfwellengetriebeeingang zugeordnet sein, wobei es grundsätzlich auch denkbar ist, dass die Kupplung zur Herstellung einer Drehmomentverbindung zwischen dem Vorderachs-Getriebeabgang und dem weiteren Zapfwellengetriebeeingang an dem Vorderachs-Getriebeabgang des Fahrgetriebes angeordnet ist.

Wie bereits erwähnt, kann die Kupplung reibschlüssig oder formschlüssig ausgebildet sein. Es kann also grundsätzlich vorgesehen sein, dass die Kupplungen jeweils formschlüssig ausgebildet sind. Allerdings ist beim Zuschalten der Zapfwelle eine Drehzahlsynchronisation zwischen den zu kuppelnden Wellen herzustellen, so dass insbesondere die Fahrkupplung zum Antreiben des Fahrgetriebes ausgerückt sein muss, damit eine Drehmomentverbindung zwischen dem Zapfwellen-Getriebeabgang des Fahrgetriebes und dem Zapfwellengetriebe hergestellt werden kann. Wie bereits dargelegt, wird jedoch eine reibschlüssig ausgebildete Kupplung bevorzugt, da in diesem Fall eine Drehzahlsynchronisation entfällt.

Gemäß einer bevorzugten Ausführungsform der Getriebeanordnung ist eine Getriebeschaltstelle vorgesehen, mittels welcher zwischen einem Antrieb des Zapfwellengetriebes durch den Vorderachs-Getriebeabgang des Fahrgetriebes oder durch die vom Motor des Nutzfahrzeugs angetriebene Welle umgeschaltet werden kann. Eine solche Getriebeschaltstelle kann in dem Zapfwellengetriebe vorgesehen sein. So kann das Zapfwellengetriebe einerseits eine Eingangswelle des Zapfwellengetriebeeingangs und eine Eingangswelle des weiteren Zapfwellengetriebeeingangs aufweisen. Diese beiden Eingangswellen können jeweils mit einer Ausgangswelle des Zapfwellengetriebes über die Getriebeschaltstelle in Drehverbindung gebracht werden, wobei die Eingangswelle des Zapfwellengetriebeeingangs über ein Zahnradpaar mit der Ausgangswelle des Zapfwellengetriebes und die Eingangswelle des weiteren Zapfwellengetriebeeingangs über ein weiteres Zahnradpaar mit der Ausgangswelle in Drehverbindung bringbar ist. Insoweit kann auch ohne eine zusätzliche Kupplüng die Eingangswelle des Zapfwellengetriebeeingangs und die Eingangswelle des Weiteren Zapfwellengetriebeeingangs kontinuierlich in Drehverbindung mit der vom Motor des Nutzfahrzeugs angetriebenen Welle einerseits und dem Vorderachs-Getriebeabgang des Fahrgetriebes andererseits stehen, wobei die Getriebeschaltstelle eine Neutralstellung aufweisen kann, in der die Zapfwelle abgeschaltet ist. In Abhängigkeit der Schaltposition der Getriebeschaltstelle des Zapfwellengetriebes ist ein Drehmomentfluss zwischen der vom Motor des Nutzfahrzeugs angetriebenen Welle und der Ausgangswelle des Zapfwellengetriebes oder zwischen dem Vorderachs-Getriebeabgang des Fahrgetriebes und der Ausgangswelle des Zapfwellengetriebes herstellbar. Unabhängig davon kann eine weitere Getriebeschaltstelle vorgesehen sein, mittels welcher zwischen den üblicherweise verwendeten Zapfwellendrehzahlen von 540 bzw. 1000 Umdrehungen pro Minute umgeschaltet werden kann, wobei diese weitere Getriebeschaltstelle lediglich auf denjenigen Zapfwellengetriebeeingang wirkt, welcher mit der vom Motor des Nutzfahrzeugs angetriebenen Welle gekoppelt ist.

In vergleichbarer Weise kann in einer alternativen Ausführungsform der Getriebeanordnung eine Getriebeschaltstelle vorgesehen sein, mittels welcher zwischen einem Antrieb des Zapfwellengetriebes durch den Vorderachs-Getriebeabgang des Fahrgetriebes oder durch den Zapfwellen-Getriebeabgang des Fahrgetriebes umgeschaltet werden kann. Bei dieser Ausführungsform gelten die bezüglich der vorstehend beschriebenen Getriebeschaltstelle zum Umschalten zwischen dem Vorderachs-Getriebeabgang des Fahrgetriebes und der vom Motor des Nutzfahrzeugs angetriebenen Welle entsprechend. Es ist in beiden Ausführungsformen zweckmäßig, die Getriebeschaltstelle dem Zapfwellengetriebe zuzuordnen.

Insbesondere kann das Zapfwellengetriebe mit dem Vorderachs-Getriebeabgang mit einer Welle gekoppelt sein. Falls der Zapfwellengetriebeeingang mit der vom Motor des Nutzfahrzeugs angetriebenen Welle gekoppelt ist, ist durch die Welle zwischen Vorderachs-Getriebeabgang und dem Zapfwellengetriebe eine zusätzliche, zweite Welle vorgesehen, über welche ein Drehmomentfluss zu dem Zapfwellengetriebe erfolgen kann.

Ferner kann die Welle mit einem Teil des Vorderachs-Getriebeabgangs gekoppelt sein, welcher auch bei einem nicht zugeschalteten Vorderachsantrieb aktiv ist. Insbesondere handelt es sich bei dem Teil des Vorderachs-Getriebeabgangs um ein Zahnrad oder um eine Welle, welches bzw. welche entsprechend der jeweils ausgewählten Schaltstufe des Fahrgetriebes in Drehung versetzt wird. Gemäß dieser Ausführungsform der Getriebeanordnung ist das Zapfwellengetriebe kontinuierlich in Abhängigkeit der Fahrtgeschwindigkeit des Nutzfahrzeugs betreibbar, wobei eine Kupplung oder Getriebeschaltstelle zur Trennung der Drehverbindung zwischen der Welle und dem Zapfwellegetriebe vorgesehen sein kann.

Alternativ kann die Welle mit einem Teil des Vorderachs-Getriebeabgangs gekoppelt sein, welcher ausschließlich bei einem zugeschalteten Vorderachsantrieb aktiv ist. Gemäß dieser Ausführungsform der Getriebeanordnung ist das Zapfwellengetriebe ausschließlich dann in Abhängigkeit der Fahrtgeschwindigkeit des Nutzfahrzeugs betreibbar, wenn der Vorderachsantrieb zugeschaltet ist.

Das erfindungsgemäße Getriebeanordnung eines landwirtschaftlichen Nutzfahrzeugs wird im Folgenden anhand der beigefügten Zeichnungen näher erläutert. Hierbei sind übereinstimmende bzw. funktionsgleiche Bauteile in den Figuren mit den selben Bezugszeichen gekennzeichnet.

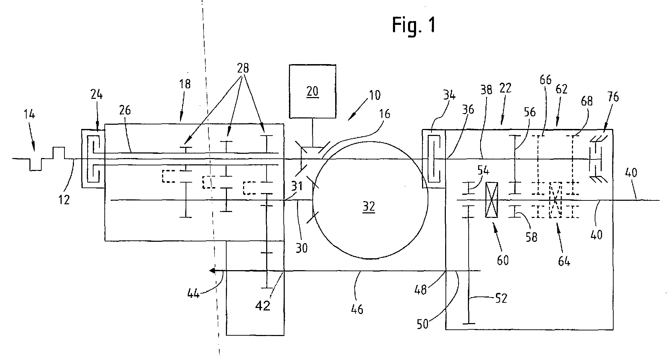

Es zeigen Fig. 1 bis Fig. 5 jeweils verschiedene schematisch dargestellte Ausführungsbeispiele der erfindungsgemäßen Getriebeanordnung.

Fig. 1 zeigt ein erstes Ausführungsbeispiel einer erfindungsgemäßen Getriebeanordnung 10 eines als Traktor ausgebildeten landwirtschaftlichen Nutzfahrzeugs. Eine Ausgangswelle 12 eines Verbrennungsmotors 14 ist drehfest mit einer von dem Verbrennungsmotor 14 angetriebenen Welle 16 verbunden. Die Welle 16 erstreckt sich durch ein Fahrgetriebe 18 und bleibt dabei von den unterschiedlichen Schaltstufen des Fahrgetriebes 18 in ihrer Drehzahl unbeeinflusst. Mittels der Welle 16 wird eine schematisch dargestellte Hydraulik- bzw. Getriebeölpumpe 20 angetrieben. Dementsprechend wird die Hydraulik- bzw. Getriebeölpumpe 20 mit einer Drehzahl angetrieben, welche unmittelbar von der Drehzahl des Verbrennungsmotors 14 abhängt. Insoweit ist die Hydraulik- bzw. Getriebeölpumpe 20 kontinuierlich in Betrieb, und zwar unabhängig davon, ob das Fahrgetriebe 18 oder ein Zapfwellengetriebe 22 zugeschaltet ist oder nicht.

Mittels einer Kupplung 24 kann die Ausgangswelle 12 des Verbrennungsmotors 14 mit einer als Hohlwelle ausgebildeten Eingangswelle 26 des Fahrgetriebes 18 in Drehverbindung gebracht werden. In Abhängigkeit der jeweils ausgewählten Schaltstufe 28 des Fahrgetriebes 18 wird eine Ausgangswelle 30 eines Hinterachs-Getriebeabgangs 31 des Fahrgetriebes 18 mit einer entsprechenden Übersetzung angetrieben. Ein Hinterachsdifferential 32 ermöglicht den Antrieb von an einer nicht dargestellten Hinterachse angeordneten Rädern. Mittels einer reibschlüssigen Kupplung 34 kann ein Zapfwellengetriebeeingang 36 mit der vom Verbrennungsmotor 14 angetriebenen Welle 16 in Drehverbindung gebracht werden. Insoweit kann eine mit dem Zapfwellengetriebeeingang 36 in Verbindung stehende Eingangswelle 38 des Zapfwellengetriebes 22 in Drehung versetzt werden, und zwar mit einer vom Verbrennungsmotor 14 abhängigen Drehzahl. Das Zapfwellengetriebe 22 weist eine Ausgangswelle 40 auf, welche mit einer Eingangswelle eines an den Traktor anbringbaren Arbeitsgeräts verbindbar ist. Das Fahrgetriebe 18 weist einen Vorderachs-Getriebeabgang 42 auf, welcher den Antrieb von an einer nicht dargestellten Vorderachse angeordneten Rädern ermöglicht. Eine entsprechende Drehverbindung mit einem Vorderachsdifferential erfolgt über eine Welle 44.

Das Zapfwellengetriebe 22 ist mit dem Vorderachs-Getriebeabgang 42 des Fahrgetriebes 18 koppelbar. Hierdurch kann die Ausgangsdrehzahl des Zapfwellengetriebes 22 bzw. der Ausgangswelle 40 mit der Fahrtgeschwindigkeit des Traktors gekoppelt und somit eine Wegzapfwelle verwirklicht werden. Die Kopplung zwischen dem Vorderachs-Getriebeabgang 42 und dem Zapfwellengetriebe 22 erfolgt mittels einer Welle 46. Die Welle 46 ist mit einem weiteren Zapfwellengetriebeeingang 48 gekoppelt. Das Zapfwellengetriebe 22 weist somit eine weitere Eingangswelle 50 auf, welche einteilig mit der Welle 46 ausgebildet sein kann. Ein drehfest mit der weiteren Eingangswelle 50 verbundenes Zahnrad 52 kämmt mit einem Losrad 54, welches auf der Ausgangswelle 40 des Zapfwellengetriebes 22 angeordnet ist. Ein drehfest mit der Eingangswelle 38 des Zapfwellengetriebes 22 verbundenes Zahnrad 56 kämmt mit einem Losrad 58, welches auf der Ausgangswelle 40 des Zapfwellengetriebes 22 angeordnet ist. Mittels einer Getriebeschaltstelle 60, welche in dem Zapfwellengetriebe 22 vorgesehen ist, kann eine drehfeste Verbindung entweder mit dem Losrad 54 oder mit dem Losrad 58 hergestellt werden. Im ersten Fall erfolgt ein Drehmomentfluss vom Verbrennungsmotor 14 über das Fahrgetriebe 18, den Vorderachs-Getriebeabgang 42, die Welle 46, die weitere Eingangswelle 50 und das Zahnradpaar 52 und 54 auf die Ausgangswelle 40 des Zapfwellengetriebes 22. In diesem Fall weist die Ausgangswelle 40 eine Drehzahl auf, die proportional zur Fahrtgeschwindigkeit des Traktors ist. Sofern mittels der Getriebeschaltstelle 60 eine drehfeste Verbindung zwischen dem Losrad 58 und der Ausgangswelle 40 hergestellt wird, erfolgt ein Drehmomentfluss vom Verbrennungsmotor 14 über die Welle 16 und die Eingangswelle 38 des Zapfwellengetriebes 22 und das Zahnradpaar 56 und 58 auf die Ausgangswelle 40 des Zapfwellengetriebes 22, vorausgesetzt, dass die Kupplung 34 eingerückt ist. In diesem Fall dreht sich die Ausgangswelle 40 des Zapfwellengetriebes mit einer Drehzahl, die unmittelbar von der Drehzahl des Verbrennungsmotors 14 abhängt.

Alternativ zu dem Zahnradpaar 56 und 58 kann eine gestrichelt dargestellte Umschaltstufe 62 vorgesehen sein, mittels welcher eine Getriebeschaltstelle 64 der Ausgangswelle 40 drehfest mit einem Zahnrad eines linken Zahnradpaars 66 oder mit einem Zahnrad eines rechten Zahnradpaars 68 verbunden werden kann. In der einen Stellung der Getriebeschaltstelle 64 ist eine Ausgangsdrehzahl der Ausgangswelle 40 von 1000 Umdrehungen pro Minute und in der anderen Stellung der Getriebeschaltstelle 64 ist eine Ausgangsdrehzahl von 540 Umdrehungen pro Minute einstellbar, vorausgesetzt, dass der Verbrennungsmotor 14 mit einer entsprechenden Drehzahl betrieben wird.

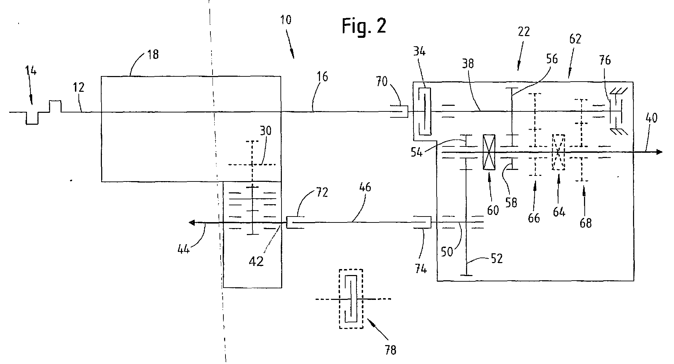

Im Falle der Ausführungsbeispiele gemäß Fig. 2 bis Fig. 5 sind neben den konstruktiven Details des Fahrgetriebes 18 ferner das Hinterachsdifferential 32 sowie die Hydraulik- bzw. Getriebeölpumpe 20 der Übersichtlichkeit halber weggelassen. Das Ausführungsbeispiel gemäß Fig. 2 entspricht im Wesentlichen dem in Fig. 1 dargestellten Ausführungsbeispiel, wobei die Welle 16 mittels einer Welle-Nabe-Verbindung 70 mit der Kupplung 34 bzw. der Eingangswelle 38 des Zapfwellengetriebes 22 verbunden ist. Auch die Welle 46 ist mittels einer Welle-Nabe-Verbindung 72 mit dem Vorderachs-Getriebeabgang 42 des Fahrgetriebes 18 verbunden. Mittels einer Welle-Nabe-Verbindung 74 ist die Welle 46 mit der Eingangswelle 50 des Zapfwellengetriebes 22 verbunden. Das Zapfwellengetriebe 22 weist eine Zapfwellenbremse 76 auf, mittels welcher die Eingangswelle 38 des Zapfwellengetriebes 22 gegenüber einem Gehäuse des Zapfwellengetriebes 22 stillsetzbar ist.

Eine schematisch dargestellte reibschlüssige Kupplung 78 kann anstelle der Welle-Nabe-Verbindung 72 oder der Welle-Nabe-Verbindung 74 vorgesehen sein, so dass die weitere Eingangswelle 50 des Zapfwellengetriebes 22 auch dann zugeschaltet werden kann, wenn sich die Welle 44 des Vorderachs-Getriebeabgangs 42 dreht und somit keine Drehzahlsynchronisation zwischen den Wellen 44 und 46 bzw. 50 besteht.

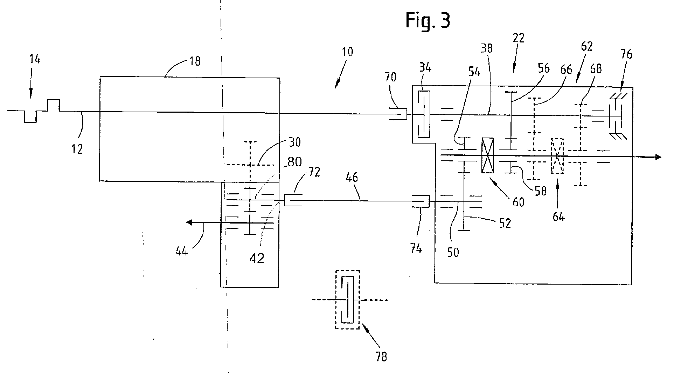

Das Ausführungsbeispiel gemäß Fig. 3 unterscheidet sich von dem in Fig. 2 dargestellten Ausführungsbeispiel im Wesentlichen dadurch, dass die Welle 46 mit ihrem linken Ende mittels der Welle-Nabe-Verbindung 72 mit einer Welle 80 des Vorderachs-Getriebeabgangs 42 drehfest verbunden ist. Die Welle 80 dreht sich mit der in Fig. 3 nicht dargestellten Eingangswelle 26 des Fahrgetriebes 18 kontinuierlich mit, auch wenn der Vorderachsantrieb nicht zugeschaltet ist. Insoweit wird ebenfalls die Welle 46, die weitere Eingangswelle 50 des Zapfwellengetriebes sowie das Zahnradpaar 52 und 54 in Drehung versetzt. Die Welle 44 des Vorderachs-Getriebeabgangs 42 gemäß Fig. 3 ist mit einer nicht dargestellten Kupplung verbunden, mittels welcher der Vorderachsantrieb des Traktors zugeschaltet oder abgeschaltet werden kann.

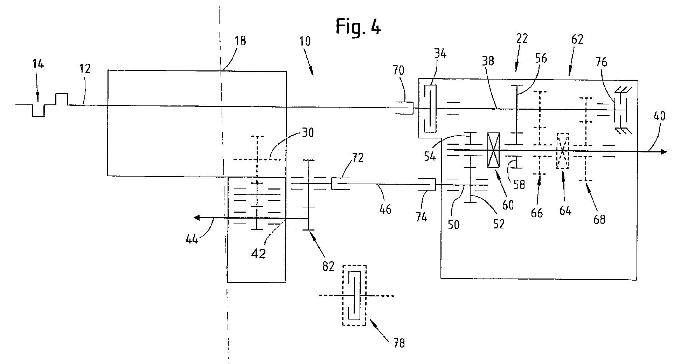

Fig. 4 zeigt ein Ausführungsbeispiel, welches im Wesentlichen vergleichbar zu dem in Fig. 2 dargestellten Ausführungsbeispiel ist. Auch hier ist die Welle 46 über die Welle-Nabe-Verbindung 72 mit der Welle 44 gekoppelt. Im Gegensatz zu Fig. 2 ist jedoch ein Zahnradpaar 82 vorgesehen, mittels welchem die Drehrichtung der Welle 46 bzw. der Ausgangswelle 40 des Zapfwellengetriebes 22 umgekehrt wird. Die Drehung erfolgt im Falle einer Vorwärtsfahrt des Traktors bevorzugt im Uhrzeigersinn von hinten auf die Ausgangswelle 40 des Zapfwellengetriebes 22 gesehen.

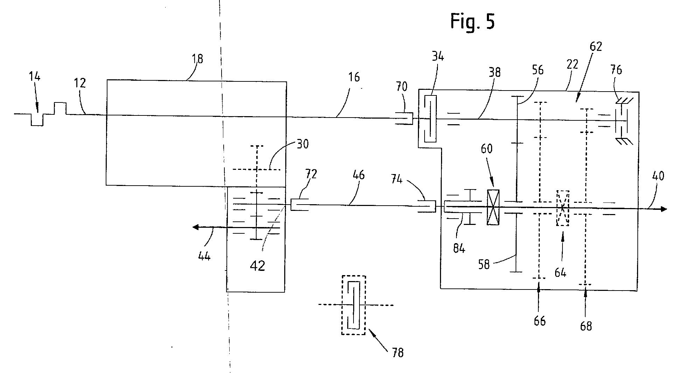

Das Ausführungsbeispiel gemäß Fig. 5 ist grundsätzlich mit dem in Fig. 3 dargestellten Ausführungsbeispiel vergleichbar und unterscheidet sich hinsichtlich des Aufbaus des Zapfwellengetriebes 22. Das Zapfwellengetriebe 22 weist ebenfalls die Eingangswelle 38 und das damit drehfest verbundene Zahnrad 56 auf, welches mit dem Losrad 58 kämmt. Auch kann optional die gestrichelt dargestellte Umschaltstufe 62 vorgesehen sein. Die Welle 46, welche den Vorderachs-Getriebeabgang 42 des Fahrgetriebes 18 mit dem Zapfwellengetriebe 22 über die Welle-Nabe-Verbindungen 72 und 74 verbindet, ist jedoch unmittelbar mit der Ausgangswelle 40 des Zapfwellengetriebes 22 koppelbar, ohne ein Zahnradpaar 52 und 54, wie es gemäß Fig. 1 vorgesehen ist, einzusetzen. Die Getriebeschaltstelle 60 des Zapfwellengetriebes 22 gemäß Fig. 5 ist daher mit der als Hohlwelle ausgebildeten weiteren Eingangswelle 84 in drehfeste Verbindung bringbar. In diesem Betriebszustand ist die Ausgangswelle 40 des Zapfwellengetriebes 22 zur Verwirklichung einer Wegzapfwelle über die Welle 46, den Vorderachs-Getriebeabgang 42 und das Fahrgetriebe 18 mit dem Verbrennungsmotor 14 verbunden. Wenn die Getriebeschaltstelle 60 eine drehfeste Verbindung zwischen der Ausgangswelle 40 des Zapfwellengetriebes 22 und dem Losrad 58 herstellt, erfolgt der Drehmomentfluss vom Verbrennungsmotor 14 über die Welle 16 und die Eingangswelle 38. In diesem Betriebszustand dreht sich die Ausgangswelle 40 in Abhängigkeit der Drehzahl des Verbrennungsmotors 14.

Zusammenfassend kann festgehalten werden, dass die erfindungsgemäße Getriebeanordnung und insbesondere die in den vorstehenden Ausführungsbeispielen beschriebenen Ausgestaltungen eine modulare Bauweise ermöglichen, bei der die Getriebeschaltstellen 60 und 64 im Wesentlichen am gleichen Anbauort vorgesehen sein können und in einfacher Weise an dasselbe mechanische Schaltgestänge anschließbar sind.

Auch ist es denkbar, die Drehzahlen der Ausgangswelle 40 des Zapfwellengetriebes 22 mittels lediglich eines einzelnen Schalthebels mit mehreren Schaltstellungen umzuschalten. So kann in einer ersten Schaltstellung die Getriebeschaltstelle 64 mit dem rechten Zahnradpaar 68 eine drehfeste Verbindung aufweisen und eine Zapfwellendrehzahl von 540 Umdrehungen pro Minute zur Verfügung stellen. In einer zweiten Schaltstellung kann sich die Getriebeschaltstelle 64 in einer Neutralstellung befinden. In einer dritten Schaltstellung kann die Getriebeschaltstelle 64 mit dem linken Zahnradpaar 66 eine drehfeste Verbindung aufweisen und eine 540 E (Economy) Zapfwellendrehzahl zur Verfügung stellen. In einer weiteren Schaltstellung kann sich die Getriebeschaltstelle 64 in der Neutralstellung befinden und die Getriebeschaltstelle 60 mit dem Losrad 58 eine drehfeste Verbindung aufweisen, so dass die Ausgangswelle 40 des Zapfwellengetriebes 22 eine Zapfwellendrehzahl von 1000 Umdrehungen pro Minute zur Verfügung stellt. In einer weiteren Schaltstellung kann die Getriebeschaltstelle 60 mit dem Losrad 54 eine drehfeste Verbindung aufweisen, so dass die Ausgangswelle 40 des Zapfwellengetriebes eine Drehzahl aufweist, welche mit der Fahrtgeschwindigkeit des Traktors gekoppelt ist und somit eine Wegzapfwelle bereitstellt.

Sämtliche Komponenten des Zapfwellengetriebes 22 können in einem einzigen Zapfwellengetriebemodul integriert sein. Das Zapfwellengetriebmodul kann besonders leicht montiert werden, wenn - wie in Fig. 2 dargestellt - die Welle 16 mittels der Welle-Nabe-Verbindung 70 und die Welle 46 mittels der Welle-Nabe-Verbindung 74 verbunden wird.

## Patentansprüche

1. Getriebeanordnung eines landwirtschaftlichen oder industriellen Nutzfahrzeugs, insbesondere eines Traktors, mit einem von einem Motor (14) des Nutzfahrzeugs antreibbaren Fahrgetriebe (18) und einem Zapfwellengetriebe (22), wobei das Fahrgetriebe (18) einen Hinterachs-Getriebeabgang (31) zum Antreiben einer Hinterachse und einen Vorderachs-Getriebeabgang (42) zum Antreiben einer Vorderachse des Nutzfahrzeugs aufweist, wobei mittels des Zapfwellengetriebes (22) ein an das Nutzfahrzeug anbringbares Arbeitsgerät antreibbar ist, wobei das Zapfwellengetriebe (22) einen ersten Zapfwellengetriebeeingang (22) aufweist, welcher mit einer vom Motor (14) des Nutzfahrzeugs angetriebenen Welle (16) unabhängig vom Fahrgetriebe (18) koppelbar ist,
**dadurch gekennzeichnet, dass** das Zapfwellengetriebe (22) einen zweiten Zapfwellengetriebeeingang (48) aufweist, welcher mit dem Vorderachs-Getriebeabgang (42) des Fahrgetriebes (18) koppelbar ist, um die Ausgangsdrehzahl des Zapfwellengetriebes (22) mit der Fahrtgeschwindigkeit des Nutzfahrzeugs zu koppeln.

2. Getriebeanordnung nach Anspruch 1, **dadurch gekennzeichnet, dass** das Zapfwellengetriebe (22) entweder über den Vorderachs-Getriebeabgang (42) des Fahrgetriebes (18) oder über eine vom Motor (14) des Nutzfahrzeugs angetriebene Welle (16) unabhängig vom Fahrgetriebe (18) antreibbar ist.

3. Getriebeanordnung nach Anspruch 1, **dadurch gekennzeichnet, dass** das Zapfwellengetriebe (22) entweder über den Vorderachs-Getriebeabgang (42) des Fahrgetriebes (18) oder über den Zapfwellen-Getriebeabgang des Fahrgetriebes (18) unabhängig vom Fahrgetriebe (18) antreibbar ist.

4. Getriebeanordnung nach einem der Ansprüche 1 bis 3, **dadurch gekennzeichnet, dass** mittels einer Kupplung (34) die vom Motor (14) des Nutzfahrzeugs angetriebene Welle (16) mit dem Zapfwellengetriebeeingang (36) koppelbar ist.

5. Getriebeanordnung nach einem der Ansprüche 1 bis 3, **dadurch gekennzeichnet, dass** mittels einer Kupplung der Zapfwellen-Getriebeabgang des Fahrgetriebes (18) mit dem Zapfwellengetriebeeingang (36) koppelbar ist.

6. Getriebeanordnung nach einem der Ansprüche 1 bis 5, **dadurch gekennzeichnet, dass** mittels einer Kupplung (78) der Vorderachs-Getriebeabgang (42) des Fahrgetriebes (18) mit dem weiteren Zapfwellengetriebeeingang (48) koppelbar ist.

7. Getriebeanordnung nach einem der Ansprüche 4 bis 6, **dadurch gekennzeichnet, dass** die Kupplung (34, 78) dem Zapfwellengetriebe (22), insbesondere dem Zapfwellengetriebeeingang (36, 48), zugeordnet ist.

8. Getriebeanordnung nach einem der Ansprüche 4 bis 7, **dadurch gekennzeichnet, dass** die Kupplung (34, 78) reibschlüssig oder formschlüssig ausgebildet ist.

9. Getriebeanordnung nach einem der Ansprüche 1 bis 8, **dadurch gekennzeichnet, dass** eine Getriebeschaltstelle (60, 64) vorgesehen ist, mittels welcher zwischen einem Antrieb des Zapfwellengetriebes (22) durch den Vorderachs-Getriebeabgang (42) des Fahrgetriebes (18) oder durch die vom Motor (14) des Nutzfahrzeugs angetriebene Welle (16) umgeschaltet werden kann.

10. Getriebeanordnung nach einem der Ansprüche 1 bis 9, **dadurch gekennzeichnet, dass** eine Getriebeschaltstelle vorgesehen ist, mittels welcher zwischen einem Antrieb des Zapfwellengetriebes (22) durch den Vorderachs-Getriebeabgang (42) des Fahrgetriebes (18) oder durch den Zapfwellen-Getriebeabgang des Fahrgetriebes (18) umgeschaltet werden kann.

11. Getriebeanordnung nach Anspruch 9 oder 10, **dadurch gekennzeichnet, dass** die Getriebeschaltstelle (60, 64) dem Zapfwellengetriebe (22) zugeordnet ist.

12. Getriebeanordnung nach einem der Ansprüche 1 bis 11, **dadurch gekennzeichnet, dass** das Zapfwellengetriebe (22) mittels des Vorderachs-Getriebeabgangs (42) mit einer Welle (46) gekoppelt ist.

13. Getriebeanordnung nach Anspruch 12, **dadurch gekennzeichnet, dass** die Welle (46) mit einem Teil des Vorderachs-Getriebeabgangs (42) gekoppelt ist, welcher auch bei einem nicht zugeschalteten Vorderachsantrieb aktiv ist.

14. Getriebeanordnung nach Anspruch 12, **dadurch gekennzeichnet, dass** die Welle (46) mit einem Teil des Vorderachs-Getriebeabgangs (42) gekoppelt ist, welcher ausschließlich bei einem zugeschalteten Vorderachsantrieb aktiv ist.

## Claims

1. Transmission arrangement of an agricultural or industrial utility vehicle, in particular of a tractor, comprising a travel drive transmission (18), which can be driven by an engine (14) of the utility vehicle, and a power takeoff transmission (22), the travel drive transmission (18) having a rear axle transmission output (31) for driving a rear axle and a front axle transmission output (42) for driving a front axle of the utility vehicle, it being possible to drive an implement which can be mounted on the utility vehicle by means of the power takeoff transmission (22), the power takeoff transmission (22) having a first power takeoff transmission input (36), which can be coupled to a shaft (16) driven by the engine (14) of the utility vehicle independently of the travel drive transmission (18), **characterized in that** the power takeoff transmission (22) has a second power takeoff transmission input (48) which can be coupled to the front axle transmission output (42) of the travel drive transmission (18), in order to couple the output speed of the power takeoff transmission (22) to the speed of travel of the utility vehicle.

2. Transmission arrangement according to Claim 1, **characterized in that** the power takeoff transmission (22) can be driven either via the front axle transmission output (42) of the travel drive transmission (18) or independently of the travel drive transmission (18) via a shaft (16) driven by the engine (14) of the utility vehicle.

3. Transmission arrangement according to Claim 1, **characterized in that** the power takeoff transmission (22) can be driven either via the front axle transmission output (42) of the travel drive transmission (18) or via the power takeoff transmission output of the travel drive transmission (18) independently of the travel drive transmission (18).

4. Transmission arrangement according to one of Claims 1 to 3, **characterized in that** the shaft (16) driven by the engine (14) of the utility vehicle can be coupled to the power takeoff transmission input (36) by means of a clutch (34).

5. Transmission arrangement according to one of Claims 1 to 3, **characterized in that** the power takeoff transmission output of the travel drive transmission (18) can be coupled to the power takeoff transmission input (36) by means of a clutch.

6. Transmission arrangement according to one of Claims 1 to 5, **characterized in that** the front axle transmission output (42) of the travel drive transmission (18) can be coupled to the further power takeoff transmission input (48) by means of a clutch (78).

7. Transmission arrangement according to one of Claims 4 to 6, **characterized in that** the clutch (34, 78) is assigned to the power takeoff transmission (22), in particular to the power takeoff transmission input (36, 48).

8. Transmission arrangement according to one of Claims 4 to 7, **characterized in that** the clutch (34, 78) is embodied as a friction clutch or a positively interlocking clutch.

9. Transmission arrangement according to one of Claims 1 to 8, **characterized in that** a transmission shifting point (60, 64) is provided, by means of which it is possible to switch between a power takeoff transmission (22) driven by the front axle transmission output (42) of the travel drive transmission (18) or driven by the shaft (16) driven by the engine (14) of the utility vehicle.

10. Transmission arrangement according to one of Claims 1 to 9, **characterized in that** a transmission shifting point is provided, by means of which it is possible to shift between a power takeoff transmission (22) driven by the front axle transmission output (42) of the travel drive transmission (18) or driven by the power takeoff transmission output of the travel drive transmission (18).

11. Transmission arrangement according to Claim 9 or 10, **characterized in that** the transmission shifting point (60, 64) is assigned to the power takeoff transmission (22).

12. Transmission arrangement according to one of Claims 1 to 11, **characterized in that** the power takeoff transmission (22) is coupled to a shaft (46) by means of the front axle transmission output (42).

13. Transmission arrangement according to Claim 12, **characterized in that** the shaft (46) is coupled to a part of the front axle transmission output (42), which is active even when the front axle drive is inoperative.

14. Transmission arrangement according to Claim 12, **characterized in that** the shaft (46) is coupled to a part of the front axle transmission output (42), which is active only when the front axle drive is operative.

## Revendications

1. Agencement de transmission d'un véhicule utilitaire agricole ou industriel, en particulier d'un tracteur, comprenant une transmission d'entraînement (18) pouvant être entraînée par un moteur (14) du véhicule utilitaire et une transmission de prise de force (22), la transmission d'entraînement (18) comprenant une sortie de transmission d'essieu arrière (31) pour entraîner un essieu arrière et une sortie de transmission d'essieu avant (42) pour entraîner un essieu avant du véhicule utilitaire, un appareil de travail pouvant être monté sur le véhicule utilitaire pouvant être entraîné au moyen de la transmission de prise de force (22), la transmission de prise de force (22) comprenant une première entrée de transmission de prise de force (36) qui peut être accouplée, indépendamment de la transmission d'entraînement (18), à un arbre (16) entraîné par le moteur (14) du véhicule utilitaire,
**caractérisé en ce que** la transmission de prise de force (22) comprend une deuxième entrée de transmission de prise de force (48) qui peut être accouplée à la sortie de transmission d'essieu avant (42) de la transmission d'entraînement (18) afin d'accoupler le régime de sortie de la transmission de prise de force (22) à la vitesse de conduite du véhicule utilitaire.

2. Agencement de transmission selon la revendication 1, **caractérisé en ce que** la transmission de prise de force (22) peut être entraînée soit au moyen de la sortie de transmission d'essieu avant (42) de la transmission d'entraînement (18) soit au moyen d'un arbre (16) entraîné par le moteur (14) du véhicule utilitaire, indépendamment de la transmission d'entraînement (18).

3. Agencement de transmission selon la revendication 1, **caractérisé en ce que** la transmission de prise de force (22) peut être entraînée soit au moyen de la sortie de transmission d'essieu avant (42) de la transmission d'entraînement (18) soit au moyen de la sortie de transmission de prise de force de la transmission d'entraînement (18), indépendamment de la transmission d'entraînement (18).

4. Agencement de transmission selon l'une quelconque des revendications 1 à 3, **caractérisé en ce que** l'arbre (16) entraîné par le moteur (14) du véhicule utilitaire peut être accouplé à l'entrée de transmission de prise de force (36) au moyen d'un embrayage (34).

5. Agencement de transmission selon l'une quelconque des revendications 1 à 3, **caractérisé en ce que** la sortie de transmission de prise de force de la transmission d'entraînement (18) peut être accouplée à l'entrée de transmission de prise de force (36) au moyen d'un embrayage.

6. Agencement de transmission selon l'une quelconque des revendications 1 à 5, **caractérisé en ce que** la sortie de transmission d'essieu avant (42) de la transmission d'entraînement (18) peut être accouplée à l'autre entrée de transmission de prise de force (48) au moyen d'un embrayage (78).

7. Agencement de transmission selon l'une quelconque des revendications 4 à 6, **caractérisé en ce que** l'embrayage (34, 78) est associé à la transmission de prise de force (22), en particulier à l'entrée de transmission de prise de force (36, 48).

8. Agencement de transmission selon l'une quelconque des revendications 4 à 7, **caractérisé en ce que** l'embrayage (34, 78) est à engagement par friction ou à engagement par complémentarité de formes.

9. Agencement de transmission selon l'une quelconque des revendications 1 à 8, **caractérisé en ce qu'**il est prévu un point de commutation de transmission (60, 64) au moyen duquel on peut commuter entre un entraînement de la transmission de prise de force (22) par la sortie de transmission d'essieu avant (42) de la transmission d'entraînement (18) ou par l'arbre (16) entraîné par le moteur (14) du véhicule utilitaire.

10. Agencement de transmission selon l'une quelconque des revendications 1 à 9, **caractérisé en ce qu'**il est prévu un point de commutation de transmission au moyen duquel on peut commuter entre un entraînement de la transmission de prise de force (22) par la sortie de transmission d'essieu avant (42) de la transmission d'entraînement (18) ou par la sortie de transmission de prise de force de la transmission d'entraînement (18).

11. Agencement de transmission selon la revendication 9 ou 10, **caractérisé en ce que** le point de commutation de transmission (60, 64) est associé à la transmission de prise de force (22).

12. Agencement de transmission selon l'une quelconque des revendications 1 à 11, **caractérisé en ce que** la transmission de prise de force (22) est accouplée à un arbre (46) au moyen de la sortie de transmission d'essieu avant (42).

13. Agencement de transmission selon la revendication 12, **caractérisé en ce que** l'arbre (46) est accouplé à une partie de la sortie de transmission d'essieu avant (42) qui est également active lorsque l'entraînement d'essieu avant n'est pas connecté.

14. Agencement de transmission selon la revendication 12, **caractérisé en ce que** l'arbre (46) est accouplé à une partie de la sortie de transmission d'essieu avant (42) qui est active exclusivement lorsque l'entraînement d'essieu avant est connecté.
